Europäisches Patentamt

European Patent Office

Office européen des brevets

(19)

(11) **EP 1 650 877 A1**

(12) **EUROPEAN PATENT APPLICATION**
published in accordance with Art. 158(3) EPC

(43) Date of publication:
**26.04.2006 Bulletin 2006/17**

(51) Int Cl.:
***H04B 1/707*** (1995.01)

(21) Application number: **04747965.4**

(22) Date of filing: **27.07.2004**

(86) International application number:
**PCT/JP2004/010652**

(87) International publication number:
**WO 2005/013505 (10.02.2005 Gazette 2005/06)**

(84) Designated Contracting States:
**DE FR GB**

(30) Priority: **30.07.2003 JP 2003282762**

(71) Applicant: **MITSUBISHI DENKI KABUSHIKI KAISHA**
**Tokyo 100-8310 (JP)**

(72) Inventors:
• **YAMAZAKI, Kenichiro,**
**c/o Mitsubishi Denki K.K.**
**Chiyoda-ku, Tokyo 1008310 (JP)**

• **NAGAYASU, Takayuki,**
**c/o Mitsubishi Denki K.K.**
**Chiyoda-ku, Tokyo 1008310 (JP)**

(74) Representative: **Sajda, Wolf E. et al**
**MEISSNER, BOLTE & PARTNER**
**Postfach 86 06 24**
**81633 München (DE)**

(54) **RECEPTION DEVICE**

(57) If a spreading factor is small, the number of multiple paths is large, and an interference signal power is larger than a desired signal power, a conventional RAKE combining receiver presents insufficient suppression of the interference signal by means of despreading, resulting in largely degraded reception performances. Upon a receiver which causes a demodulation section/path combining section to despread a received spread signal, which has been coded by a spread code, with the spread code, and causes a decoding section to decode the despread signal, the demodulation section/path combining section includes a CIR estimating section and a tap coefficient calculating section that respectively output tap coefficients, a combining section that causes a switch to switch between the CIR estimating section and the tap coefficient calculating section to weight the received spread signal with the tap coefficients, and combines the weighted signals, and a despreading section that despreads the combined signal with the assigned spread code, and the scale of a circuit can be reduced by sharing an interference suppressing section with a conventional RAKE receiver.

FIG. 2

**Description**

BACKGROUND OF THE INVENTION

1. Field of the Invention

The present invention relates to a receiver employing a spread spectrum communication system and a CDMA (Code Division Multiple Access) communication system.

2. Description of the Related Art

Propositions for a mobile communication system employing a CDMA include a high-speed data communication over a downlink. According to this method, different spread codes are assigned to respective mobile stations, signals which are spread by the spread codes orthogonal to each other and are multiplexed are transmitted from a base station, the respective mobile stations despread the received signals with the spread code assigned thereto by means of a matched filter to extract a signal directed thereto, thereby receiving the subject signal transmitted thereto by discriminating the subject signal from signals transmitted to the other mobile stations.

Under a multipath environment where delayed waves are generated due to the transmission environment, it is possible to increase an SNR (signal power to noise power ratio) by despreading respective signals received from the multiple paths at respective synchronized timings thereof, weighting them according to the phase and amplitude thereof, and combining them. This configuration is generally known as a RAKE receiver.

With this configuration, the desired signals are extracted by the despreading, and the interference signals are suppressed for the respective signals from the multiple paths. If the spreading factor is relatively small and the number of the multiple paths is extremely large, or if an interference signal power, which corresponds to a multipath component of the desired signal and a multipath component of the other code-multiplexed signals, is larger than the desired signal power, the interference signal components are not sufficiently suppressed by the despreading, and thus remain, resulting in a degradation of reception performances.

JP 3334648 B discloses a technique for solving the above problem. However, JP 3334648 B is provided with a Rake combining section and an equalizing section independently, thereby increasing the scale of a circuit. Moreover, a transversal filter is used for the equalizing section, leading to a problem in that the scale of the circuit further increases.

SUMMARY OF THE INVENTION

As described above, with the conventional RAKE combining receiver, if the spreading factor is relatively small and the number of multiple paths is large, or if an interference signal power, which corresponds to the multipath component of a desired signal and the multipath component of the other code-multiplexed signals, is larger than the desired signal power, there is a problem in that the interference signals are not sufficiently suppressed by the despreading, resulting in a degradation of the reception performances.

On the other hand, if the spreading factor is sufficiently large and the number of the multipaths is relatively small, or if an interference signal power, which corresponds to the multipath component of a desired signal and other code-multiplexed signals, is smaller than the desired signal power, better reception performances are provided by causing the RAKE receiver to combine paths without removing the interference signals.

The present invention realizes a configuration which can decrease a circuit scale by providing an interference suppressing section that improves the performances by suppressing the interference signals which cause the degradation of the performances of the RAKE receiver, and sharing circuit components with the conventional RAKE receiver.

A demodulation section/path combining section of a receiver according to the present invention which causes the demodulation section/path combining section to despread a received spread signal coded by a spread code, and causes a decoding section to decode the despread signal, includes a CIR estimating section that outputs tap coefficients, a tap coefficient calculating section that similarly outputs tap coefficients, a combining section that causes a switch to switch between the CIR estimating section and the tap coefficient calculating section, weights the received spread signal with the tap coefficients, and combines the weighted signals, and a despreading section that despreads the combined signal with the assigned spread code.

The receiver according to the present invention, by selecting the outputs from the CIR estimating section or the output from the tap coefficient calculating section by switching therebetween, and combining the signals weighted by the tap coefficients as weighting coefficients of the respective paths, provides a conventional RAKE combining function, and an interference suppressing function, and allows respective variable delaying sections, respective tap coefficient multiplying sections, and a combining section to be shared therebetween, thereby reducing the circuit scale.

BRIEF DESCRIPTION OF THE DRAWINGS

In the accompanying drawings:

Fig. 1 is a configuration diagram according to First Embodiment of the present invention;
Fig. 2 is a configuration diagram of a demodulation section/path combining section according to First Embodiment;
Fig. 3 is a chart useful in explaining an example of processing carried out by a tap coefficient calculating section;
Fig. 4 is a configuration diagram of a demodulation section/path combining section according to Second Embodiment;
Fig. 5 is a configuration diagram of a demodulation section/path combining section according to Third Embodiment;
Fig. 6 is a chart useful in explaining timings of signals coming from two paths, and received by a path detecting section according to Fourth Embodiment of the present invention;
Fig. 7 is a chart useful in explaining an example of processing carried out by a tap coefficient calculating section 203 according to Fourth Embodiment of the present invention;
Fig. 8 is a flowchart of a tap coefficient calculation process according to Fourth Embodiment of the present invention;
Fig. 9 is a chart showing signal timings of three paths useful in explaining a tap number reduction process according to Fourth Embodiment of the present invention; and
Fig. 10 is a chart showing pseudo path timings useful in explaining the tap number reduction process according to Fourth Embodiment of the present invention.

DESCRIPTION OF THE PREFERRED EMBODIMENTS

First Embodiment

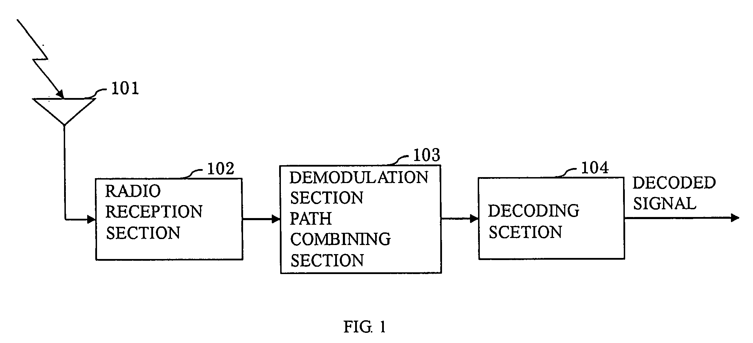

A description will now be given of First Embodiment. Fig. 1 shows a configuration according to First Embodiment of the present invention. In Fig. 1, a signal to be received is received by a reception antenna 101, undergoes a reception power amplification, a down conversion, an A/D conversion, and the like within a radio reception section 102, and is input to a demodulation section/path combining section 103. The demodulation section/path combining section 103 carries out despreading with a spread code each assigned to a mobile station, and outputs a data channel signal extracted by means of path combining to a decoding section 104. The decoding section 104 decodes the input data channel signal to extract a decoded signal.

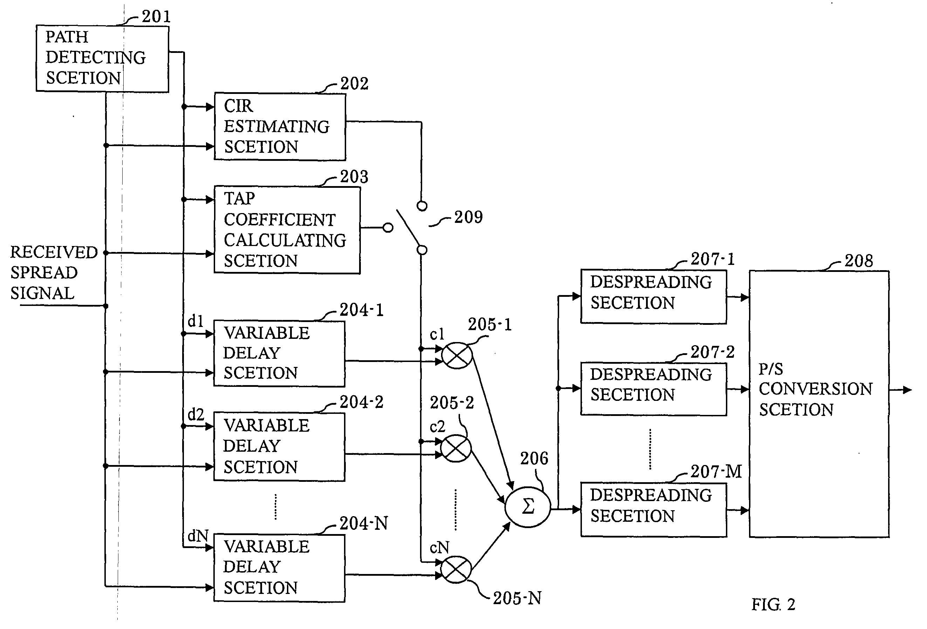

Fig. 2 shows a configuration of the demodulation section/path combining section 103. In Fig. 2, the received spread signal is transmitted to a path detecting section 201, and is simultaneously input to a CIR (Channel Impulse Response) estimating section 202, a tap coefficient calculating section 203, and variable delay sections 204-1 to 204-N. Note that N denotes the number of effective paths used for the path combining. The variable delay sections 204-1 to 204-N adjust respective delays for the effective paths according to amounts of delays d1 to dN of the respective effective paths transmitted from the path detecting section 201, and transmit respective outputs to multipliers 205-1 to 205-N.

The multipliers 205-1 to 205-N multiply respective tap coefficients c1 to cN input from the CIR estimating section 202 or the tap coefficient calculating section 203, which are switched by a switch 209, by the outputs from the variable delay sections 204-1 to 204-N. Respective results of the multiplications carried out by the multipliers 205-1 to 205-N are combined by a combining section 206 for the path combining. An output from the combining sention 206 is input to despreading sections 207-1 to 207-M (M denotes the number of multiplex of the spread codes), and is despread by the respectively assigned spread codes, a P/S (Parallel/Serial) conversion section 208 subjects despread results to a P/S conversion, and a result of the P/S conversion is then output.

The switch 209 is switched to the CIR estimating section 202 if the number of the effective paths to be processed detected by the path detecting section 201 is smaller than a predetermined number, and is switched to the tap coefficient calculating section 203 if the number is larger than the predetermined value, for example.

Moreover, as other information according to which the switch 209 is switched, there is a received signal strength of a path. For example, the switch 209 is switched to the CIR estimating section 202 if there is a large difference in the level of the received signal strength among the paths, and is switched to the tap coefficient calculating section 203 if there is a small difference in the level.

Moreover, there is a method to perform the switching according to the spreading factor determined by a radio communication system used for the receiver.

If the path combining is carried out with the tap coefficients output from the CIR estimating section 202, the receiver serves as a general RAKE combiner, the signals weighted by the multipliers 205-1 to 205-N are combined, and the combined signal is despread, and is output.

On the other hand, if the path combining is carried out with the tap coefficients output from the tap coefficient calculating section 203, the signals weighted by the multipliers 205-1 to 205-N using the tap coefficients according to a purpose of calculating the tap coefficients are combined, and the combined signal is despread, and is output.

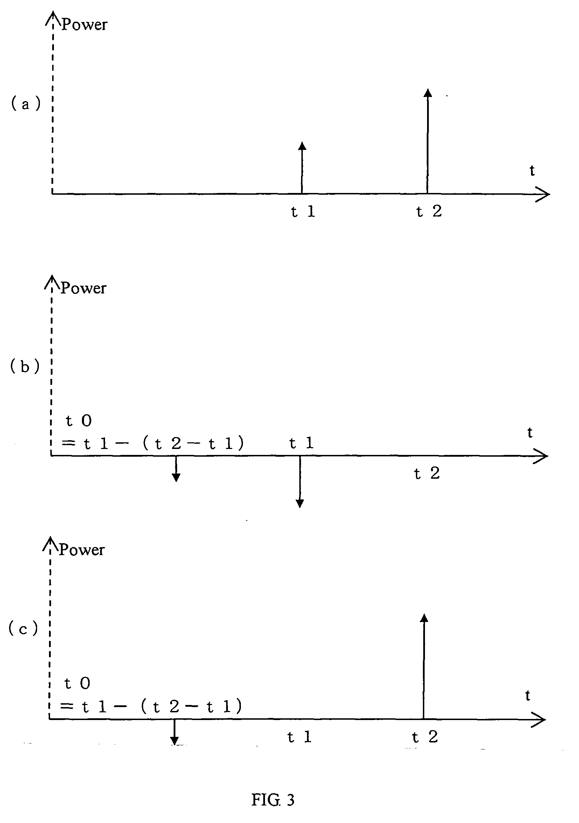

A description will now be given of an example of the tap coefficient calculation process carried out by the tap coefficient calculating section 203. Fig. 3 shows an example where the number of the multiple paths is two.

Fig. 3(a) shows a received path profile. Fig. 3(a) shows a case where signals coming from the respective paths are received at time points t1 and t2, and the horizontal axis and vertical axis respectively represent time and the electric power.

Generally, channel information (amplitude and phase information) of the respective paths is obtained by a correlation and the like based upon a known pilot channel signal transmitted after multiplexed with a data channel signal.

It is assumed that the path corresponding to the time point t2 is a desired path, and the path corresponding to the time point t1 is an interference path. In this case, tap coefficients are calculated so that outputs shown in Fig. 3(b) are obtained in order to remove the interference path at the time point t1 based upon the channel information of the respective path.

Specifically, if the channel information for the path at the time point t1 is a complex number h1, and the channel information for the path at the time point t2 is a complex number h2, a tap coefficient h' is -h1/h2 to obtain the output shown in Fig. 3(b).

If this tap coefficient is set as the tap coefficient c2 provided for the multiplier 205-2, 1 is set as the tap coefficient cl provided for the multiplier 205-1, and respective results of the multiplication are combined by the combining section 206, an output shown in Fig. 3(c) is obtained, the path corresponding to the time point t1 disappears, and the influence of the multipath interference is thus suppressed.

On this occasion, for the variable delay sections 204, the amounts of delays d1 and d2 are respectively set only to 204-1 and 204-2, and for the multipliers 205, the tap coefficients c1 and c2 are respectively set only to 205-1 and 205-2. The amounts of delays d3 to dN of 204-3 to 204-N and the tap coefficients c3 to cN of 205-3 to 205-N are respectively set to 0 (as long as the tap coefficients c3 to cN are set to 0, the amounts of delays d3 to dN are not necessarily set to 0).

Note that although the description is given of the tap coefficients output from the tap coefficient calculating section 203 based upon the above example, the present invention is not limited to the above example of the numerical operation, and the configuration can accommodate various types of algorithms used to calculate the tap coefficients.

As described above, the receiver is characterized by the configuration which, by selecting the outputs from the CIR estimating section 202 or the output from the tap coefficient calculating section 203 by switching therebetween, and combining the signals weighted by the tap coefficients serving as the weighting coefficients of the respective paths, provides the conventional RAKE combining function, and the interference suppressing function, and allows the respective variable delaying sections 204-1 to 204-N, the respective tap coefficient multiplying sections 205-1 to 205-N, and the combining section 206 to be shared therebetween, thereby reducing the circuit scale.

Note that the channel information (amplitude and phase information) of the respective paths may be estimated in the tap coefficient calculating section 203, or information from the CIR estimating section 202 may be used as the channel information.

Second Embodiment

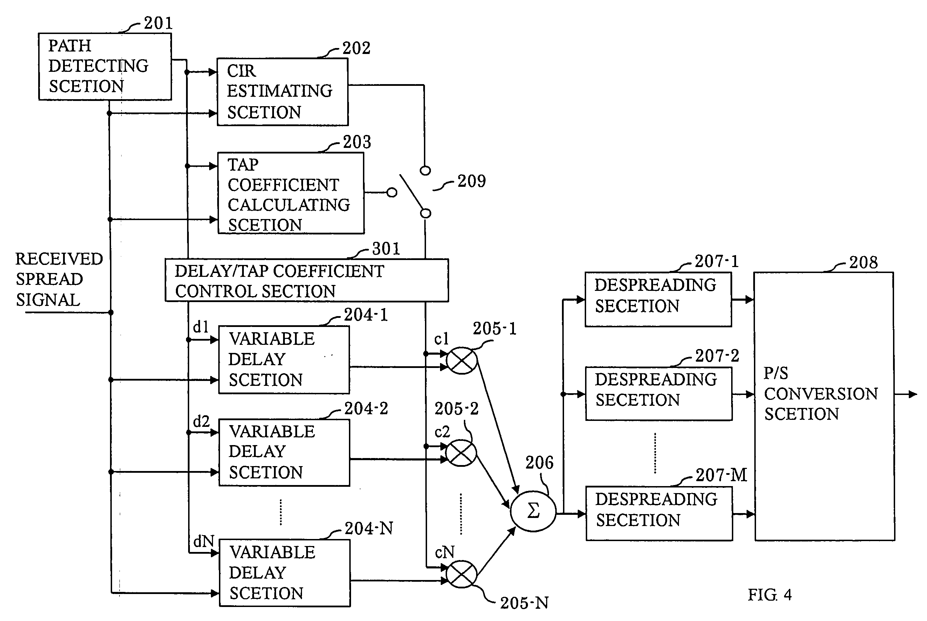

A description will now be given of Second Embodiment. Fig. 4 shows a configuration of a receiver according to Second Embodiment. Note that like components are denoted by like numerals as of First Embodiment in Fig. 4, and will not further be explained.

According to this Embodiment, the number of effective paths is determined by the path detecting section 201, the tap coefficients corresponding to the number of the effective paths are obtained by the CIR estimating section 202 or the tap coefficient calculating section 203, and the outputs therefrom are input to a delay/tap coefficient control section 301. The delay/tap coefficient control section 301 determines the number of the amounts of delays and the tap coefficients to be set, based upon the information on the number of effective paths, and provides control to suspend the operation of surplus circuits more than the number of the effective paths.

For example, if the number of paths is 2 as described in First Embodiment, there is provided control that the amounts of delays are set only to the variable delay sections 204-1 and 204-2, the tap coefficients are set only to the multipliers 205-1 and 205-2, and the operations of the variable delay sections 204-3 to 204-N and the multipliers 205-3 to 205-N are suspended.

The suspension of the operations of the variable delay sections and the multipliers corresponding to the paths exceeding the effective paths in this way enables reductions of the amount of numerical operations, and thus the power consumption of the receiver.

Although the above description is given of the case with two effective paths, it is apparent that the number of the effective paths is not limited to two, and may be set to an arbitrary number.

Although the number of the paths output from the path detecting section 201 may change according to the change of the reception environment while the receiver is operating, the delay/tap coefficient control section 301 can address this case.

Third Embodiment

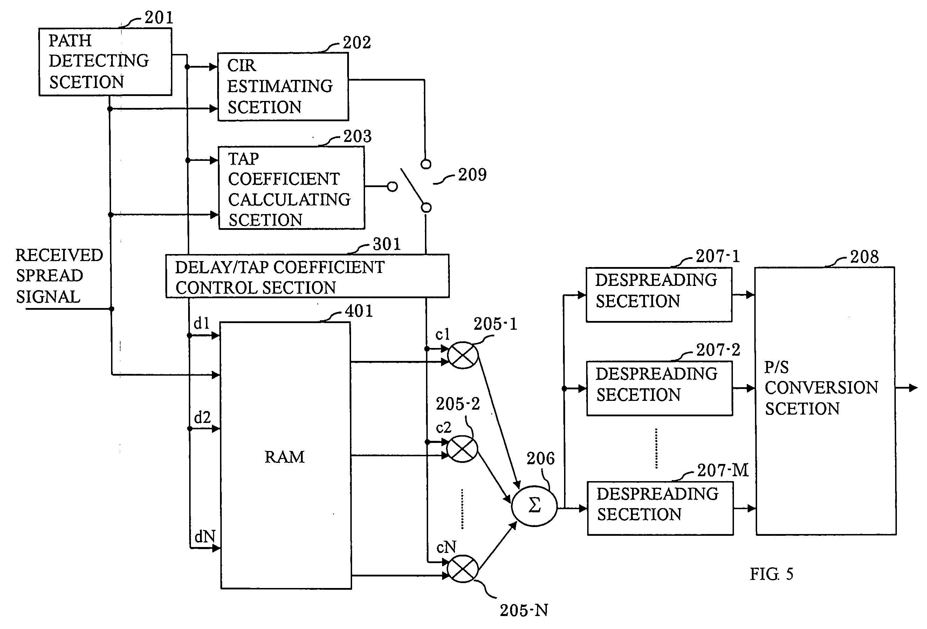

A description will now be given of Third Embodiment. Fig. 5 shows a configuration of a receiver according to Third Embodiment. Note that like components are denoted by like numerals as of First and Second Embodiments in Fig. 5, and will not further be explained.

This Embodiment employs a configuration that uses a RAM 401 in place of the variable delay sections 204-1 to 204-N.

The RAM 401 has a function of delaying the received spread signal according to amounts of delays output from the delay/tap coefficient control section 301, and outputs signals according to the amounts of delays.

The outputs from the path detecting section 201, the CIR estimating section 202, and the tap coefficient calculating section 203 are input to the delay/tap coefficient control section 301, and the control is carried out corresponding to the number of the effective paths.

The RAM 401 outputs the output signals according to the respective amounts of delays output from the delay/tap coefficient section 301 to the multipliers 205-1 to 205-N. Processing similar to that of First Embodiment is carried out subsequently to the multiplication of the tap coefficients by the multipliers 205-1 to 205-N.

With regard to the tap coefficients output from the delay/tap coefficient control section 301, as in Second Embodiment, the input of the amounts of delays, the output to the multipliers, the multiplication of the tap coefficients, and the path combining, corresponding to the number of the effective paths are carried out.

As described above, the employment of the RAM 401 can eliminate the variable delay sections 204-1 to 204-N to reduce the size of the circuit.

Fourth Embodiment

A description will now be given of Fourth Embodiment. A configuration of the receiver according to Fourth Embodiment is the same as the configuration of First Embodiment shown in Fig. 2. However, it should be understood that the receiver may be implemented by the configuration of Second Embodiment shown in Fig. 4 or the configuration of Third Embodiment shown in Fig. 5.

A description will now be given of a specific example of an operation of the tap coefficient calculating section 203 and a tap number reduction process carried out in the operation with reference to drawings.

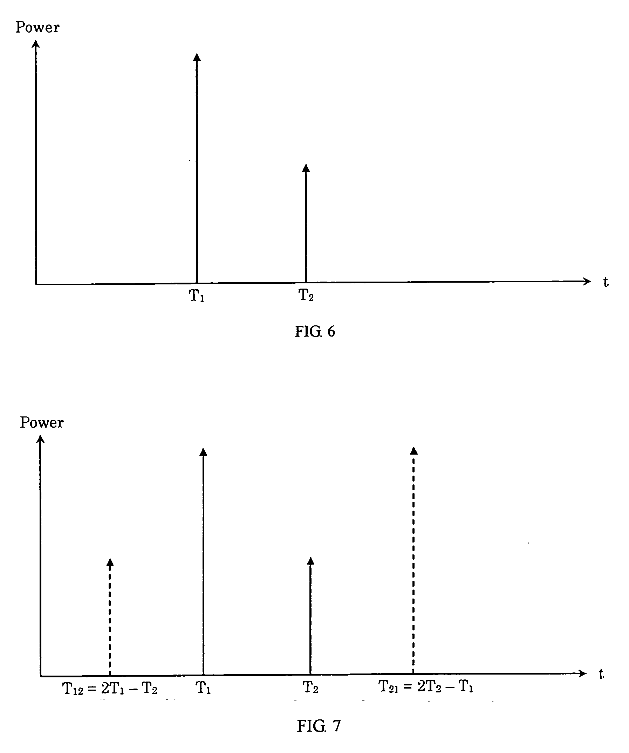

Fig. 6 is a chart useful in explaining timings of signals coming from two paths, and received by the path detecting section 201 according to Forth Embodiment of the present invention. It is assumed that the signal from a path 1 is received at a time point $t = T_1$, the signal from a path 2 is received at a time point $t = T_2$, and respective channel variables are denoted by $f_1$ and $f_2$.

Respective correct despread timings are $t = T_1$ and $t = T_2$ in Fig. 6. If $y_2$ denotes a signal obtained by carrying out the despreading starting from $t = T_2$ in order to obtain a signal coming from the path 2, $y_2$ is a sum of a desired signal $f_2S$ obtained by despreading a signal from the path 2 starting from $t = T_2$, a multipath interference $f_1I_2$ obtained by despreading a signal from the path 1 starting from $t = T_2$, and a noise $n_2$, and is represented by the following equation (1).

$$y_2 = f_2S + f_1I_2 + n_2 \qquad\qquad (1)$$

In the above equation, $I_2$ denotes an interference component from all the transmitted signals at the timing $t = T_2$.

Fig. 7 is a chart useful in explaining an example of the processing carried out by the tap coefficient calculating section 203 according to Fourth Embodiment of the present invention. As shown in Fig. 7, a pseudo path timing $T_{21} = T_2 + (T_2-T_1) = 2T_2 - T_1$ is set at a timing delayed from $t = T_2$ by $(T_2-T_1)$. If $y_3$ denotes a signal obtained by carrying out the despreading from this timing, the signal $y_3$ contains a component $f_2I_2$, which has a correlation with the interference component of $y_2$ and is represented by the following equation (2).

$$y_3 = f_1I_3 + f_2I_2 + n_3 \qquad\qquad (2)$$

In the above equation, $I_3$ denotes an interference component from all the transmitted signals at the timing $t = T_{21}$. A description will now be given of a fact that an interference power can be reduced by means of a pseudo path timing such as $t = T_{21}$. If the average of the interference power is represented as $I^2 = <|I_2|^2> = <|I_3|^2>$, and it is assumed

that $f_1 = f_2 = 1$, and $n_2 = n_3 = 0$ for simplicity, a signal power to interference power ratio for $y_2$ is represented as $|S/I|^2$.

The following equation (3) is obtained by subtracting a result of multiplication of $y_3$ by a proper coefficient $r = 1/2$ from $y_2$ based upon the equations (1) and (2).

$$y_2 - ry_3 = (f_2S + f_1I_2 + n_2) - r(f_1I_3 + f_2I_2 + n_3)$$
$$= (S + I_2) - (1/2)(I_3 + I_2)$$
$$= S + (1/2)I_2 - (1/2)I_3 \qquad (3)$$

The average interference power of the above equation (3) is $(1/2)I^2$, which shows that the average interference power is halved with respect to that of $y_2$.

In other words, a part of the interference is replaced by another interference which does not correlate with the original interference, resulting in the reduction of the average interference power. For general $f_1$ and $f_2$, the coefficient $r$ is obtained by the following equation (4). In the equation, "*" denotes a complex conjugate.

$$r = (f_1f_2^*I^2)/(|f_1|^2I^2 + |f_2|^2I^2 + n^2) \qquad (4)$$

Moreover, a signal despread from the timing $t = T_1$ may be processed similarly with a pseudo path timing $t = T_{12} = 2T_1 - T_2$. Therefore, it is possible to suppress the interference signal component by adding results obtained by despreading from pseudo path timings used to suppress interference components from other received paths to a result obtained by despreading from a path timing for each received path.

However, to suppress the interference component by means of this method, it is necessary to set the pseudo path timing for combinations between all the received paths, the number of the pseudo path timings increases as the number of the received paths increases, and it is impossible to avoid the increase of the circuit scale and the amount of the numerical operations. If the number of the received paths is N, the number of the required pseudo path timings is N(N-1), and the total number of the taps is $N^2$, which is a sum of the number the original received paths N and the number of the pseudo path timings N(N-1).

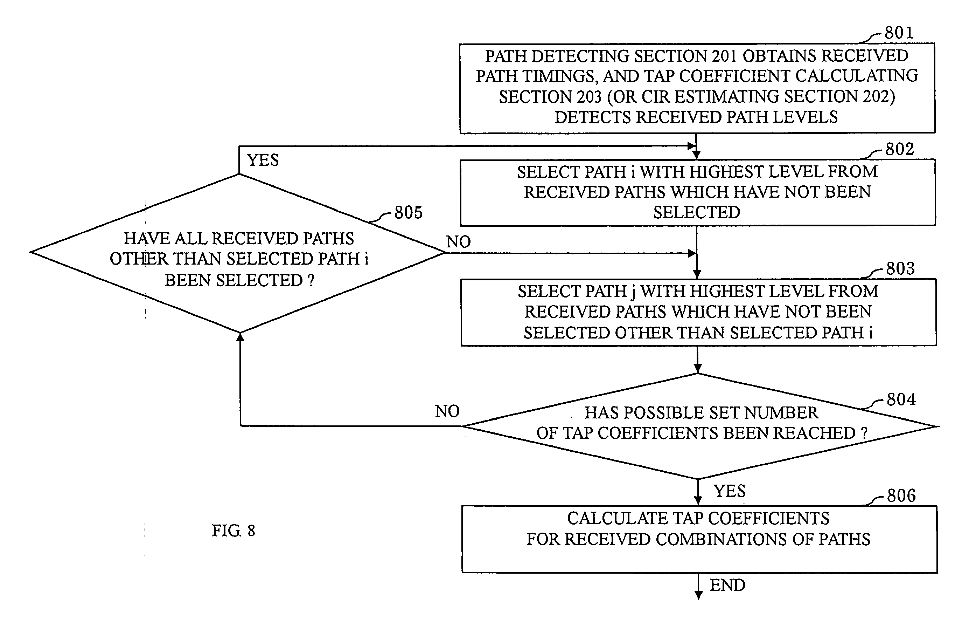

A description will now be given of a tap coefficient calculation process in order to reduce the circuit scale and the amount of the numerical operations while the characteristic degradation is suppressed. Fig. 8 is a flowchart of the tap coefficient calculation process according to Fourth Embodiment of the present invention.

In order to reduce the number of the taps, it is important to select pseudo path timings to retain more desired signal components, and to remove more interference signal components. The suppression of the interference signal components and the reduction of the number of taps are simultaneously realized by prioritizing all pseudo path timings, and employing pseudo path timings with higher priorities within a permissible tap number.

First, the respective path timings of the received paths are detected by the path detecting section 201, and respective path levels are detected within the tap coefficient calculating section 203 (or the CIR estimating section 202) (step S801). A path i with the highest path level is then selected from all the received paths (step S802).

Interference with the received path i selected in step S802 is interference caused by the other received paths, and a path j with the highest path level is selected from the remaining received paths (step S803). This operation can select a combination (i, j) of the received path i with the highest path level and the path j which causes the largest interference with the received path i.

It is then determined whether a sum of the number of the original received paths and the number of combinations of selected paths has reached a possible set number of the tap coefficients as a result of an addition of the path combination (i, j) selected in steps S802 and S803 (step S804). If it is determined that the sum has not reached the possible set number, it is then determined whether all paths which interfere with the path i have been selected in step S802 (step S805).

If it is determined that not all the paths have been selected, the process proceeds to step S803, and a new path k which has the maximum path level is selected from the paths which interfere with the path i, and have not been selected. Then, after a new combination of the paths is selected, it is determined again whether the sum of the number of the original received paths and the number of the combinations of selected paths has reached the possible set number of the tap coefficients (step S804). Subsequently, the selection of a combination of paths is repeated up to the possible set number of the tap coefficients.

On the other hand, if it is determined that all the paths have been selected in step S805, the process proceeds to step S802, a new path I which has the maximum path level is selected from the received paths which have not been selected. A path m with the highest path level is selected from the paths which interfere with the new path 1 (step S803). Then, after a new combination of the paths is selected, it is determined whether the sum of the number of the original received paths and the number of the combinations of selected paths has reached the possible set number of the tap coefficients (step S804). Subsequently, the selection of a combination of paths is repeated up to the possible set number of the tap coefficients.

If the sum of the number of the original received paths and the number of the combinations of selected paths has reached the possible set number of the tap coefficients as a result of repeating the series of processing in steps S802 to S805 described above, tap coefficients to suppress the interference are obtained according to the above equation (4) for the respective combinations of the selected paths, and the demodulation is then carried out (step S806).

As a result of the above process, it is possible to select the combinations of the paths according to the priority of the power level within the possible set number of the tap coefficients specified in advance, thereby suppressing the interference signal components and reducing the number of the taps at the same time.

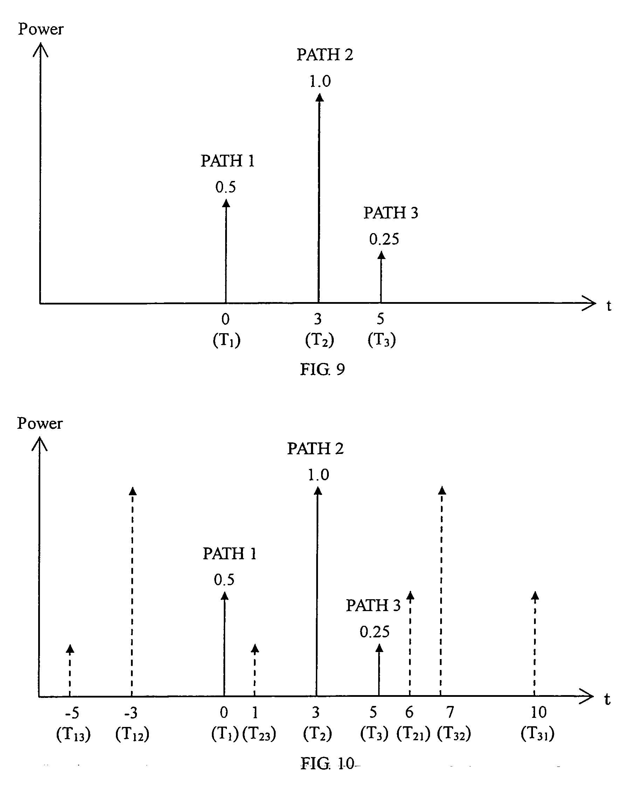

A description will now be given of the tap coefficient calculation process for three received paths as a specific example. Fig. 9 is a chart showing signal timings of the three paths useful in explaining the tap number reduction process according to Fourth Embodiment of the present invention. It is assumed that a signal from a path 1 with a power of 0.5 is received at $T_1 = 0$, a signal from a path 2 with a power of 1.0 is received at $T_2 = 3$, and a signal from a path 3 with a power of 0.25 is received at $T_3 = 5$.

On the other hand, Fig. 10 is a chart showing pseudo path timings useful in explaining the tap number reduction process according to Fourth Embodiment of the present invention. The pseudo path timings are set as $T_{12}$, $T_{13}$, $T_{21}$, $T_{23}$, $T_{31}$, and $T_{32}$ with respect to the reception from the paths 1 to 3. The tap number reduction process described with reference to the flowchart in Fig. 8 is applied to prioritize the pseudo path timings to be selected.

First, the path 2 with the highest level is selected from the path 1, path 2, and path 3, which are three received paths respectively at the time points $T_1$, $T_2$, and $T_3$. The path 1 with the highest level is then selected from the paths 1 and 3 which interfere the path 2, and the pseudo path timing $T_{21}$ is thus identified as a pseudo path timing with the next highest priority. The path 3 other than the path 1 which has been selected is then selected from the paths 1 and 3, and the pseudo path timing $T_{23}$ is thus identified as a pseudo path timing with the next highest priority. The above process identifies the priority of the pseudo path timings as an order of $T_{21}$ and $T_{23}$ if the path 2 is selected as the path with the highest level.

Then, the path 1 with the highest level is selected from the received paths 1 and 3 other than the path 2 which has been already selected as the path with the highest level. The path 2 with the highest level is then selected from the paths 2 and 3 which interfere with the path 1, and the pseudo path timing $T_{12}$ is thus identified as a pseudo path timing with the highest priority. The path 3 other than the path 2 which has been selected is then selected as a path with the highest path level next to the path 2 from the paths 2 and 3, and the pseudo path timing $T_{13}$ is thus identified as a pseudo path timing with the next highest priority. The above process identifies the priority of the pseudo path timings as an order of $T_{12}$ and $T_{13}$ if the path 1 is selected as the path with the highest level next to the path 2.

Finally, the priority of the pseudo path timings is identified as an order of $T_{32}$ and $T_{31}$ in a similar manner if the received path 3 is selected. As a result, the priority of all the pseudo path timings is determined as an order of $T_{21}$, $T_{23}$, $T_{12}$, $T_{13}$, $T_{32}$, and $T_{31}$.

In the above description, all of the six pseudo path timings are prioritized for the three received paths, and all the pseudo path timings can be employed if the possible set number of the tap coefficients is 3 + 6 = 9 or more.

On the other hand, if the possible set number of the tap coefficients is specified in advance, it is possible to select the combinations of the paths according to the priority of the power level within the possible set number, thereby suppressing the interference signal components and reducing the number of the taps at the same time. For example, in Fig. 10, if the possible set number of the tap coefficients is six, the three time points $T_1$, $T_2$, and $T_3$ corresponding to the paths 1 to 3 and the three time points $T_{21}$, $T_{23}$, and $T_{12}$ highest in the priority of the pseudo path timings are selected, and the calculation of the tap coefficients and the demodulation are then carried out.

<u>INDUSTRIAL APPLICABILITY</u>

The present invention enables an interference wave removing section to be shared with a conventional RAKE combining section, thereby reducing the circuit scale, and is preferably applied to a radio communication device of the CDMA type.

**Claims**

1. A receiver, comprising a radio reception section that carries out an A/D conversion for a received spread signal, a demodulation section/path combining section that despreads an output from the radio reception section with an assigned speared code to carry out path combining, and a decoding section that decodes a data channel signal extracted by the path combining, **characterized in that**:

the demodulation section/path combining section comprises:

a path detecting section that detects effective paths of the received spread signal;
a CIR estimating section that outputs tap coefficients based upon the received spread signal and an output from the path detecting section;
a tap coefficient calculating section that similarly outputs tap coefficients based upon the received spread signal and an output from the path detecting section;
a switch that switches between the output from the CIR estimating section and the output from the tap coefficient calculating section;
a variable delay section that adjusts a delay period of the received spread signal according to an amount of delay supplied from the path detecting section;
a combining section that weights respective outputs from the variable delay section with the tap coefficients output from the CIR estimating section or the tap coefficient calculating section, and combines the weighted outputs; and
a despreading section that despreads the combined signal with the assigned spread code.

2. The receiver according to claim 1, **characterized in that** the variable delay section comprises a RAM.

3. The receiver according to claim 1 or 2, **characterized by** further comprising a delay/tap coefficient control section that receives the output from the CIR estimating section or the tap coefficient calculating section, determines the number of delays and the number of the tap coefficients to be set, based upon information on the number of the effective paths, and provides control to suspend an operation of surplus circuits exceeding the number of the effective paths.

4. The receiver according to any one of claims 1 to 3, **characterized in that** the tap coefficient calculating section obtains pseudo path timings used to suppress interference components of the respective effective paths received from other effective paths based upon a path timing and a path level of the respective effective paths detected by the path detecting section, and calculates the tap coefficients based upon the path timings and the pseudo path timings.

5. The receiver according to claim 4, **characterized in that** the tap coefficient calculating section prioritizes the pseudo path timings based upon the path level of the respective effective paths, and identifies the pseudo path timings according to the priority within a range of a possible set number of the tap coefficients specified in advance.

FIG 1

FIG. 2

( a )

Power

t1    t2    t

( b )

Power

t 0
= t 1 − ( t 2 − t 1 )    t 1    t

t 2

( c )

Power

t 0
= t 1 − ( t 2 − t 1 )    t

t 1    t 2

FIG. 3

FIG. 4

FIG. 5

EP 1 650 877 A1

Power

$T_1$          $T_2$          t

FIG. 6

Power

$T_{12} = 2T_1 - T_2$     $T_1$          $T_2$          $T_{21} = 2T_2 - T_1$     t

FIG. 7

EP 1 650 877 A1

```
                                                          ┌─801
                              ┌──────────────────────────────────────┐
                              │ PATH DETECTING SECTION 201 OBTAINS RECEIVED │
                              │ PATH TIMINGS, AND TAP COEFFICIENT CALCULATING │
                              │ SECTION 203 (OR CIR ESTIMATING SECTION 202) │
                              │      DETECTS RECEIVED PATH LEVELS      │
                              └──────────────────────────────────────┘
```

YES

                                                          ┌─802
                              ┌──────────────────────────────────────┐
                              │ SELECT PATH i WITH HIGHEST LEVEL FROM │
                              │  RECEIVED PATHS WHICH HAVE NOT BEEN   │
                              │               SELECTED               │
                              └──────────────────────────────────────┘

┌─805

HAVE ALL RECEIVED PATHS          NO
OTHER THAN SELECTED PATH i
    BEEN SELECTED ?

                                                          ┌─803
                              ┌──────────────────────────────────────┐
                              │ SELECT PATH j WITH HIGHEST LEVEL FROM │
                              │  RECEIVED PATHS WHICH HAVE NOT BEEN   │
                              │  SELECTED OTHER THAN SELECTED PATH i  │
                              └──────────────────────────────────────┘

                                                          ┌─804
            NO              HAS POSSIBLE SET NUMBER
                          OF TAP COEFFICIENTS BEEN REACHED ?

                                          YES
                                                          ┌─806
FIG. 8                        ┌──────────────────────────────────────┐
                              │        CALCULATE TAP COEFFICIENTS      │
                              │  FOR RECEIVED COMBINATIONS OF PATHS    │
                              └──────────────────────────────────────┘

                                            │ END

Power

PATH 2
1.0

PATH 1
0.5

PATH 3
0.25

t

0
($T_1$)

3
($T_2$)

5
($T_3$)

FIG. 9

Power

PATH 2
1.0

PATH 1
0.5

PATH 3
0.25

t

-5
($T_{13}$)

-3
($T_{12}$)

0
($T_1$)

1
($T_{23}$)

3
($T_2$)

5
($T_3$)

6
($T_{21}$)

7
($T_{32}$)

10
($T_{31}$)

FIG. 10

<div align="center">

**INTERNATIONAL SEARCH REPORT**

</div>

| | International application No. |
| --- | --- |
| | PCT/JP2004/010652 |

**A. CLASSIFICATION OF SUBJECT MATTER**
    Int.Cl⁷ H04B1/707

According to International Patent Classification (IPC) or to both national classification and IPC

**B. FIELDS SEARCHED**

Minimum documentation searched (classification system followed by classification symbols)
    Int.Cl⁷ H04B1/69-1/713, H04J13/00-13/06

Documentation searched other than minimum documentation to the extent that such documents are included in the fields searched

| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 3334648 B2 (NEC Corp.), 15 October, 2002 (15.10.02), Par. Nos. [0028] to [0030] & WO 2000/027042 A1 & JP 2000-138656 A & EP 1128569 A1 & CN 1323466 A | 1-5 |
| A | JP 7-231278 A (Fujitsu Ltd.), 29 August, 1995 (29.08.95), Full text (Family: none) | 1-5 |

☐ Further documents are listed in the continuation of Box C.    ☐ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 September, 2004 (02.09.04) | 21 September, 2004 (21.09.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)